# EUROPÄISCHE PATENTSCHRIFT

(11) **EP 0 522 329 B1**
(45) Veröffentlichungstag und Bekanntmachung des Hinweises auf die Patenterteilung: **06.09.1995**
(21) Anmeldenummer: 92110273.7
(22) Anmeldetag: 17.06.1992
(51) Int. Cl.: G01L 5/28

(54) **Verfahren und Vorrichtung zum Prüfen der Bremsen von Kraftfahrzeugen**
Procedure and device for testing the brakes of automotive vehicles
Procédé et dispositif d'essai des freins de véhicules automobiles

(30) Priorität: 10.07.1991 DE 4122818
(43) Veröffentlichungstag der Anmeldung: 13.01.1993
(73) Patentinhaber: HOFMANN WERKSTATT-TECHNIK GMBH, D-64319 Pfungstadt (DE)
(72) Erfinder: Hollube, Walter, Dipl.-Ing., W-6144 Zwingenberg (DE)
(74) Vertreter: Nöth, Heinz, Dipl.-Phys.

(56) Entgegenhaltungen:
- DE-A- 3 603 508
- DE-A- 3 701 020
- DE-A- 3 935 378

## Beschreibung

Die Erfindung betrifft ein Verfahren nach dem Oberbegriff des Patentanspruches 1 und eine Vorrichtung nach dem Oberbegriff des Patentanspruches 4.

Ein derartiges Verfahren und eine derartige Vorrichtung sind aus der DE-OS 25 18 850 bekannt. Bei dem bekannten Verfahren und der bekannten Vorrichtung zur Prüfung der Bremsen von Kraftfahrzeugen mit mehreren gleichzeitig angetriebenen Achsen, die mechanisch unlösbar miteinander gekoppelt sind, und bei denen zwischen die beiden Räder einer jeden Achse Ausgleichsgetriebe geschaltet sind, werden die beiden zu prüfenden Räder einer Achse auf zwei Rollenpaare eines Bremsprüfstandes aufgesetzt und gegensinnig mit etwa gleicher Geschwindigkeit angetrieben. Beim Prüfvorgang wird beispielsweise durch Betätigen des Bremspedals auf die zu prüfende Bremse, insbesondere auf die Bremse des in Vorwärtsrichtung drehenden Rades, ein Bremsdruck ausgeübt und die von der Bremse aufgebrachte Bremskraft erfaßt. Durch unterschiedliche Raddurchmesser und Schlupf läßt es sich nicht vermeiden, das Verspannungen in den Ausgleichsgetrieben, insbesondere in den Ausgleichsgetrieben, die sich an den nicht angetriebenen Rädern abstützen, entstehen. Hierdurch wird zwangsläufig der bei der Bremsprüfung ermittelte Bremskraftverlauf (Bremskraftkurve) beeinflußt.

Aufgabe der Erfindung ist es, ein Verfahren und eine Vorrichtung der eingangs genannten Art zu schaffen, bei denen die Bremsprüfung, insbesondere die Analyse der ermittelten Bremskräfte, unbeeinflußt ist von in den Ausgleichsgetrieben und/oder Gelenkwellen während der Bremsprüfung auftretenden Verspannungen.

Diese Aufgabe wird beim Verfahren erfindungsgemäß durch die im Patentanspruch 1 angegebenen kennzeichnenden Merkmale und bei der Vorrichtung erfindungsgemäß durch die im Kennzeichen des Patentanspruches 4 angegebenen Merkmale gelöst.

Bei den Lastwechseln von Beschleunigung zu Abbremsung und Abbremsung zu Beschleunigung ergeben sich, bedingt durch das Spiel in den Ausgleichsgetrieben und den Gelenkwellen, Zustände, bei denen keine Verspannungen in den Ausgleichsgetrieben und Gelenkwellen, die zwischen den beiden mit entgegengesetzten Drehrichtungen angetriebenen Rädern liegen, auftreten. Immer dann, wenn solche spannungsfreien Zustände auftreten, wird die Bremskraft erfaßt bzw. ausgewertet. Man erhält somit ein Bremskraftprüfergebnis, das frei ist von Meßwertverfälschungen, die aus Verspannungen in den Ausgleichsgetrieben und Gelenkwellen herrühren.

Bei den beschriebenen Lastwechseln verändert sich die Drehwinkelstellung der beiden angetriebenen Räder zueinander. Das heißt, ein Rad wird von dem anderen überholt, da ein Rad kurzzeitig schneller dreht. Aus diesem Drehgeschwindigkeitsverhalten der beiden Räder lassen sich die spannungsfreien Zustände ermitteln. Ein spannungsfreier Zustand liegt immer dann vor, wenn sich die Differenz zwischen den Drehzahlen der beiden gegenläufig angetriebenen Räder ändert. Immer dann, wenn eine Änderung der Drehzahldifferenz der gegenläufig angetriebenen Räder vorliegt, wird die Bremskraft ermittelt. Die einzelnen auf diese Weise spannungsfrei gemessenen Bremskräfte lassen sich zu einer durchgehenden geglätteten Bremskraftkurve verbinden, so daß man eine verspannungsfrei gemessene Bremskraftkurve erhält.

Eine weitere Möglichkeit zur Ermittlung der spannungsfreien Zustände besteht darin, daß man den Bremskraftverlauf während des Wechsels zwischen positiver und negativer VerSpannung analysiert und im Bereich der Wendepunkte den Bremskraftverlauf für die Bestimmung der verspannungsfreien Bremskraftkurve durch Verbinden dieser Wendepunkte zu einer geglätteten Bremskraftkurve ermittelt.

Mit einem Pedalkraft- oder Luftdruckmesser kann die Bremswirkung der rechten Bremse mit der lingen Bremse verglichen werden. Da in der Regel Auflaufbremsen verwendet werden, wird die Bremskraft nur an dem in Fahrtrichtung drehenden Rad gemessen. Die Antriebe für die Rollenpaare werden entweder mit einem Frequenzumformer oder mit zwei Sanftanlaufgeräten geregelt.

Die Erfindung ist beispielsweise anwendbar für die Bremsprüfung von vierradangetriebenen Fahrzeugen sowie von Lastkraftwagen mit Doppelachsen bzw. Mehrfachachsen für den Antrieb.

Anhand der Figuren wird die Erfindung noch näher erläutert. Es zeigt:
- Fig. 1: schematisch den mechanischen Aufbau eines Bremsprüfstandes, bei dem die Erfindung als Ausführungsbeispiel zur Anwendung kommt;
- Fig. 2: ein Blockschaltbild für einen in Fig. 1 dargestellten Bremsprüfstand mit Auswerteeinrichtung und Drehzahl- und Drehmomentsteuerung für den Rollenpaarantrieb des Bremsprüfstandes;
- Fig. 3: den Kurvenverlauf für die Bremskraft mit geregelter Verspannung und den Verlauf der Bremskraft ohne Verspannung; und
- Fig. 4: schematisch ein Antriebssystem für ein Rollenpaar, in welches eine Meßanordnung für die Bremskraft integriert ist.

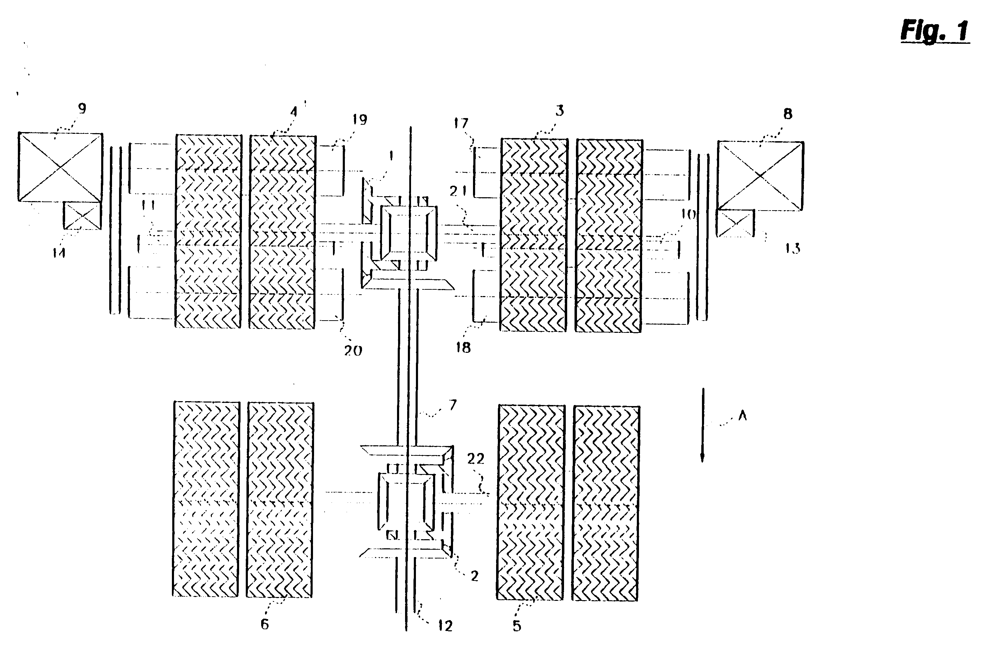

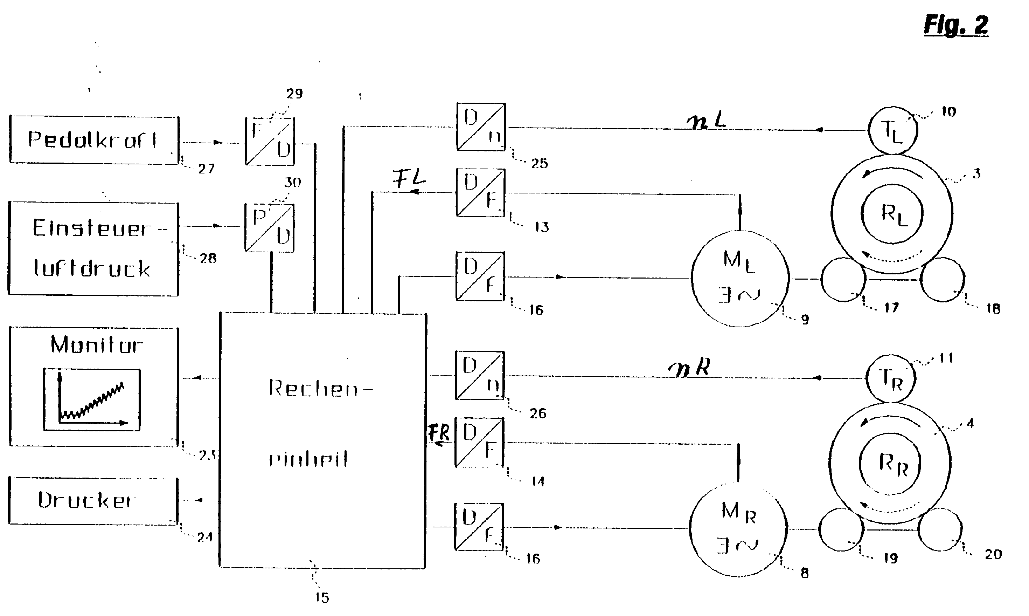

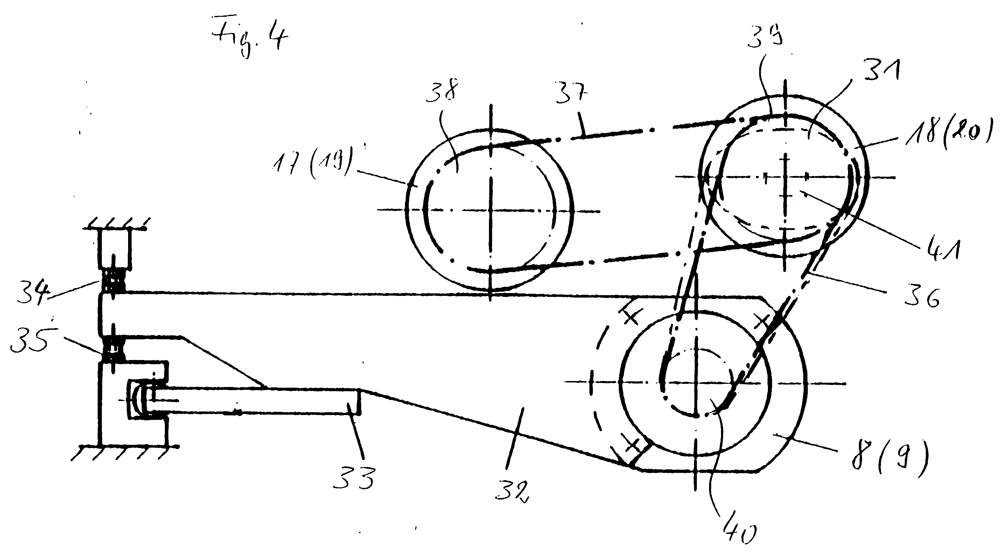

Ein in den Figuren 1 und 2 gezeigter Bremsprüfstand besitzt zwei Rollenpaare 17, 18 und 19, 20, auf die bei der Bremsprüfung die zu prüfenden Räder 3, 4 bzw. 5, 6 an einer Antriebsachse 21 bzw. 22 aufgesetzt werden. Wie aus der Fig. 1 zu ersehen ist, kann es sich bei den Rädern 3 bis 6 auch jeweils um aus zwei Kraftfahrzeugrädern bestehende Radsätze handeln. Die Räder 3, 4 bzw. 5, 6 sind auf ihren jeweiligen Antriebsachsen 21 bzw. 22 über Ausgleichsgetriebe 1 und 2 miteinander verbunden. Die Ausgleichsgetriebe 1 und 2 besitzen Kegelräder und Tellerräder und sind in bekannter Weise aufgebaut. Die vom nicht dargestellten Fahrzeugmotor ermittelte Antriebskraft wird über eine Antriebselle 12 auf die Antriebsachsen 21 und 22 übertragen, wobei eine Verbindungswelle 7 zwischen die Antriebsachsen geschaltet ist. Für den Antrieb der beiden Rollenpaare 17, 18 und 19, 20 sind zugeordnete Antriebseinrichtungen in Form von Antriebsmotoren 8 und 9 vorgesehen. Für die Bremskraftermittlung sind Kraftmeßeinrichtungen 13 und 14 mit den Antriebsmotoren 8 und 9 verbunden, wobei Reaktionsmomente der Antriebsmotore bei der Bremskraftermittlung gemessen werden. In bekannter Weise können hierzu elektronische Kraftmeßelemente mit Dehnungsmeßstreifen zur Drehmomenterfassung zur Anwendung kommen. Ein entsprechender Meßaufbau ist beispielsweise in dem Katalog der Firma Hofmann Werkstatt-Technik GmbH "Bremsprüfstände für Lkw/Pkw kombiniert, brekon 1/13, 1/16, 2/13 (Impressum 94 02 218 10.87 D)" und auch in Fig. 4 gezeigt.

Für die Drehzahlmessung während der Bremsprüfung sind den beiden Rollenpaaren 17, 18 und 19, 20 zugeordnete Tastrollen 10, 11 vorgesehen. Diese Tastrollen liefern beispielsweise Tastrollenimpulse für eine Drehzahlmessung. Entsprechende Drehzahlsignale nL und nR werden von Drehzahlgebern TL und TR (Fig. 2) geliefert. Die Drehzahlsignalgeber TL und TR sind mit den Tastrollen 10 und 11 für die Auswertung der Tastrollenimpulse verbunden.

Wie aus Fig. 2 zu ersehen ist, werden die beiden drehzahlproportionalen Signale nL und nR über Drehzahl/Digitalwandler 25, 26 an eine als Rechnereinheit ausgebildete Auswerteeinrichtung 15 weitergeleitet. An diese Auswerteeinrichtung 15 sind auch die beiden Kraftmeßeinrichtungen 13 und 14 angeschlossen. Die Kraftmeßeinrichtungen 13 und 14 liefern den gemessenen Bremskräften proportionale Ausgangssignale FL und FR an die Auswerteeinrichtung 15.

Mit der Auswerteeinrichtung 15 ist eine Drehzahl/Drehmomentsteuereinrichtung 16 verbunden. Die Drehzahl/Drehmomentsteuereinrichtung 16 kann als Digital/Frequenz oder Spannungs-Wandler ausgebildet sein. Diese Drehzahl/Drehmomentsteuereinrichtung 16 steuert jeweils den Antriebsmotor 8 bzw. 9 an, der mit dem Rollenpaar 17, 18 bzw. 19, 20 verbunden ist, auf dem das Rad aufgesetzt ist, das entgegengesetzt zu dem Rad umläuft, an welchem die Bremsprüfung gerade durchgeführt wird. Der Antriebsmotor dieses Rollenpaares wird von der Drehzahl/Drehmomentsteuereinrichtung 16 in der Weise angesteuert, daß das entsprechende Rollenpaar beschleunigt und abgebremst wird. Hierdurch ergeben sich aufgrund des Spiels spannungsfreie Zustände in den Ausgleichsgetrieben und Gelenkwellen zwischen den Rädern. Nur während dieser spannungsfreien Zustände wird die Bremskraftmessung an der zu prüfenden Bremse durchgeführt.

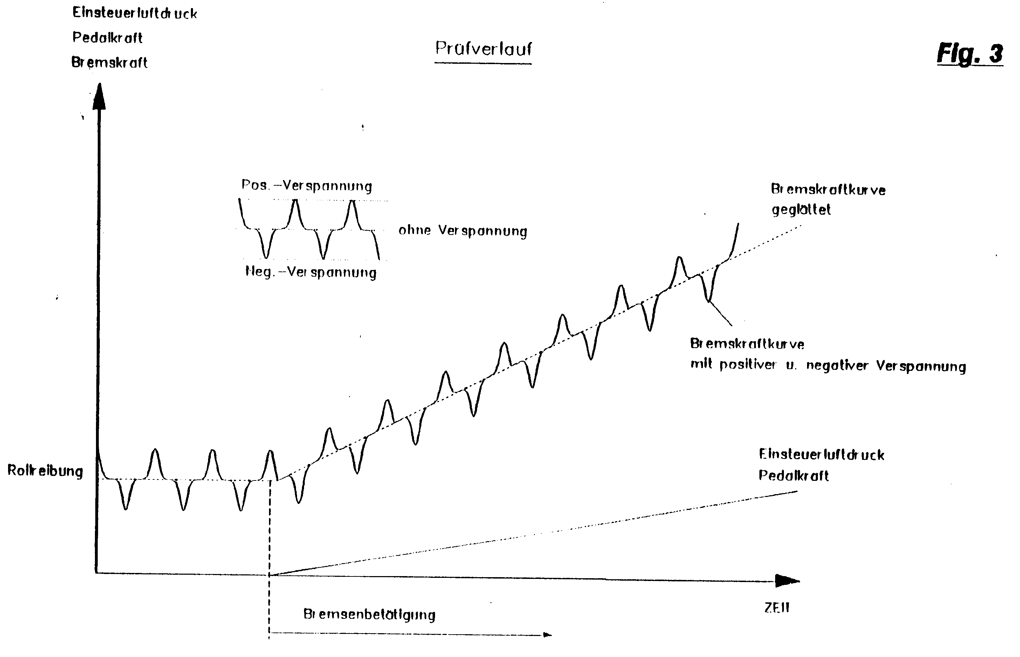

Wie insbesondere auch aus der Fig. 3 zu ersehen ist, lassen sich die Lastwechselübergänge und damit die spanungsfreien Zustände durch augenblickliche Analyse der Bremskraftkurve (3) durch Bestimmung der Wende- und Sattelpunkte ermitteln. Diese Punkte lassen sich zu einer geglätteten Bremskraftkurve verbinden, wie die Fig. 3 zeigt. Hieraus läßt sich auch das Verhältnis von positiver und negativer Verspannung bestimmen. Mit diesen Werten können dann beim Prüfvorgang die Antriebsmotore 8 und 9 entsprechend geregelt werden und die spannungsfreien Bremskräfte aufgezeichnet werden.

An einem Monitor 23 oder Bildschirm läßt sich die ermittelte Bremskraftkurve darstellen. Mit Hilfe eines Druckers 24 läßt sich die Bremskraftkurve aufzeichnen.

Für die Bremskraftprüfung werden der Auswerteeinrichtung 15 auch die Werte für die Pedalkraft 27 und den Einsteuerluftdruck 28 über einen Kraft/Digitalwandler 29 und einen Druck/Digitalwandler 30 zugeführt. In der Fig. 3 ist der Verlauf der Pedalkraft und des Einsteuerluftdruckes bei der Bremsenbetätigung zeitabhängig aufgezeichnet.

Im einzelnen wird der Prüfvorgang unter Bezugnahme auf die Figur 3 noch näher erläutert.

Das zu prüfende Kraftfahrzeug wird auf den Bremsprüfstand aufgefahren. In der Fig. 1 handelt es sich beispielsweise um die Prüfung der Radsätze an einer angetriebenen Doppelachse eines Kraftfahrzeugs. Die zu prüfenden Räder 3, 4 bzw. Radsätze der Antriebsachse 21 befinden sich auf den Rollenpaaren 17, 18 und 19, 20 des Prüfstandes. Die Tastrollen 10 und 11 liegen von unten mit Reibschluß an den Reifenprofilen der Räder an. Für die Durchführung der Bremsprüfung werden die Rollenpaare 17, 18 und 19, 20 von den Antriebsmotoren 8 und 9 gegensinnig angetrieben und in der Weise gesteuert, daß sie etwa mit gleicher Drehzahl, jedoch gegenläufig umlaufen. Auf diese Weise wird gewährleistet, daß die Gelenkwelle 7, mit welcher die beiden Ausgleichsgetriebe 1 und 2 der beiden Antriebsachsen 21 und 22 verbunden sind, stillsteht, wie das auch bei der Prüfanordnung in der deutschen Offenlegungsschrift 25 18 850 der Fall ist.

Es wird angenommen, daß die dem Radsatz 3 zugeordnete Bremse geprüft wird. Der Radsatz 4 läuft dann im Gegensinn um. Während des Prüfvorgangs wird der Antriebsmotor 9 in der Weise von der Drehzahl/Drehmomentsteuereinrichtung 16 angesteuert, daß das zum Rad 3 gegenläufige Rad 4 in zeitlicher Aufeinanderfolge beschleunigt und abgebremst wird. Hierzu wird die Drehzahl/Drehmomentsteuereinrichtung 16 von der Auswerteeinrichtung 15 entsprechend betätigt. Hierdurch wird das Rad 3, an welchem sich die zu prüfende Bremse befindet, aufeinanderfolgend beschleunigt und abgebremst. Durch diesen Lastwechsel von Beschleunigung zu Abbremsung und Abbremsung zu Beschleunigung ergibt es sich aufgrund des Spiels in den Ausgleichsgetrieben 1 und 2 und den Gelenkwellen, daß zwischen Höchstwerten positiver Verspannung und Höchstwerten negativer Verspannung Zustände ohne Verspannung auftreten, wie das insbesondere in der Fig. 3 dargestellt ist. Durch Erfassung der Rollreibung mit Hilfe bekannter Meßanordnungen, die beispielsweise in der deutschen Offenlegungsschrift 25 18 850 oder der deutschen Auslegeschrift 1 473 462 sowie in dem oben erwähnten Hofmann-Prospekt beschrieben sind oder wie es schematisch in Fig. 4 dargestellt ist, läßt sich die Bremskraft messen. Die geregelte Verspannung, die sich aufgrund des Lastwechsels zwischen Beschleunigung und Abbremsung ergibt, ist in der Fig. 3 mit der durchgezogenen Linie dargestellt. Innerhalb dieses geregelten Verspannungsverlaufes ergeben sich Zustände, bei denen keine Verspannungen in den Ausgleichsgetrieben und den Gelenkwellen vorliegen. In dem in Fig. 3 vergrößert dargestellten Kurvenabschnitt etwa in der Mitte zwischen positiver Verspannung und negativer Verspannung ergeben sich diese mit "ohne Verspannung" gekennzeichneten Zustände. Die Zustände, bei denen keine Verspannungen vorliegen, lassen sich mit Hilfe der Drehzahldifferenzmessung an den beiden Rädern 3 und 4 und mit Hilfe der Tastrollen 10 und 11, die mit den Rädern 3 und 4 während des Prüflaufs mitumlaufen und entsprechende Tastrollensignale abgeben, ermitteln.

Zwischen den Zuständen, bei denen die Zahnflanken der Ausgleichsgetriebe und der Gelenkwellen sich berühren und eine Verspannung vorhanden ist, ergeben sich Zustände, bei denen die Zahnflanken getrennt sind und bei denen die Differenz der Tastrollenimpulse, d.h. die Differenz der Drehzahlen, sich ändert. Während dieser Zustände bzw. Zeiträume wird die Bremskraft der zu prüfenden Bremse jeweils erfaßt. Es ergeben sich dann verschiedene Meßpunkte zu den angegebenen Zeitpunkten bzw. während der angegebenen spannungsfreien Zustände, wobei dann diese Meßpunkte (punktierte Linie in Fig. 3) zu einer glatten Bremskraftkurve ergänzt werden können.

Wenn die zum Rad 3 gehörende Bremse geprüft ist, erfolgt in der gleichen Weise die Prüfung der Bremse am Rad 4. Hierbei wird, da in aller Regel Auflaufbremsen zur Anwendung kommen, die Bremskraft der Bremse an dem in Fahrtrichtung (Pfeil A) sich drehenden Rad gemessen.

In der Fig. 4 ist eine weitere Möglichkeit gezeigt, mit der das Abbremsen und Beschleunigen des gegenläufigen Rollenpaares zur Erzeugung der spannungsfreien Zustände erreicht werden kann. Anstelle der in der Fig. 2 gezeigten elektrischen bzw. elektronischen Ansteuerung der Antriebsmotore 8 und 9 wird in der Fig. 4 ein mechanisches System gezeigt, mit dem die abwechselnden positiven und negativen Verspannungen erzeugt werden können. Die beiden Laufrollen 17 bzw. 19 und 18 bzw. 20 werden vom Antriebsmotor 8 bzw. 9 angetrieben. Hierzu weisen die Laufrollen drehfest verbundene Kettenräder 38 und 39, welche von einem Kettentrieb 37 umschlungen werden, auf. Ferner besitzt der Antriebsmotor ein Kettenrad auf seiner Motorwelle, das über einen Kettentrieb 36 eines der beiden Kettenräder der Laufrollen (im Ausführungsbeispiel das Kettenrad 39), antreibt. Dieses Antriebssystem wird für das Laufrollenpaar verwendet, auf welchem das Rad mit der zu prüfenden Bremse aufsteht.

Das jeweils gegenläufige Rollenpaar wird dann über ein Kettenrad 31 angetrieben, das einen elliptischen Querschnitt hat. Das Kettenrad 31 ist beim dargestellten Ausführungsbeispiel drehfest mit der Laufrolle 18 bzw. 20 verbunden. Es ist jedoch auch möglich, dieses Antriebskettenrad an der anderen Laufrolle 17 bzw. 19 oder an der Motorwelle koaxial zum Kettenrad 40 vorzusehen. Der Umfang des Kettenrades 31 entspricht dem Umfang des kreisrunden Kettenrades 39. Wenn das Antriebskettenrad 31 mit dem elliptischen Umfang an der Motorwelle koaxial zum Kettenrad 40 befestigt ist, wird sein Umfang so gewählt, daß er dem Umfang des kreisrunden Kettenrades 40 entspricht.

Wenn sich der verringerte Durchmesser des Kettenrades 31 beim Antrieb auswirkt, erreicht man eine erhöhte Winkelgeschwindigkeit der Laufrollen, und wenn der größere Durchmesser des Kettenrades 31 sich auswirkt, erreicht man eine verringerte Winkelgeschwindigkeit der Laufrollen. Auf diese Weise lassen sich die positiven und negativen Verspannungen abwechselnd herstellen.

Zum Umschalten zwischen den beiden Kettenrädern 31 und 39 dient eine Schaltkupplung 41.

Ferner zeigt die Fig. 4 das Meßsystem für die Bremskraftmessung. Dieses besteht aus einem Drehmomenthebel 32, der am Gehäuse des Antriebsmotors 8 bzw. 9 befestigt ist. Dieser Drehmomenthebel ist zwischen zwei Anschlägen 34 und 35 um die Achse der Motorwelle schwenkbar. Der Drehmomenthebel dient zur Betätigung eines Biegestabs 33, der einseitig, beispielsweise am Maschinenrahmen, abgestützt ist. Am Biegestab 33 sind nicht näher dargestellte Dehnungsmeßstreifen vorgesehen zur Erzeugung elektrischer Signale, die proportional zur ermittelten Bremskraft sind. Die Bremskraft äußert sich als Reaktionsmoment des Antriebsmotors und entsprechende Auslenkung des Drehmomenthebels 32, die auf den Biegestab 33 übertragen wird. Die Dehnungsmeßstreifen verursachen dann proportionale elektrische Signale, die dann in der Auswerteeinrichtung 15 ausgewertet werden.

## Patentansprüche

1. Verfahren zum Prüfen der Bremsen eines Kraftfahrzeugs mit mehreren gIeichzeitig angetriebenen Achsen, die mechanisch unlösbar miteinander gekoppelt sind und bei denen zwischen die beiden Räder einer jeden Achse Ausgleichsgetriebe geschaltet sind, bei dem die von Rollenpaaren eines Bremsenprüfstands gegensinnig mit etwa gleicher Geschwindigkeit angetriebenen Kraftfahrzeugräder zumindest einer Achse beim Prüfvorgang einzeln abgebremst und die Bremswirkung der jeweiligen, einem Rad zugeordneten Bremse erfaßt wird, dadurch gekennzeichnet, daß das Rad, dem die zu prüfende Bremse zugeordnet ist, über das gegenläufige Rad und dazwischenliegende Ausgleichsgetriebe abwechselnd abgebremst und beschleunigt wird, so daß spannungsfreie Zustände zwischen den beiden gegenläufigen Rädern während eines Prüfvorgangs auftreten, und daß die Bremskraft jeweils während der spannungsfreien Zustände erfaßt wird.

2. Verfahren nach Anspruch 1, dadurch gekennzeichnet, daß die spannungsfreien Zustände durch Vergleich der Geschwindigkeiten der beiden gegenläufigen Räder erfaßt werden.

3. Verfahren nach Anspruch 1 oder 2, dadurch gekennzeichnet, daß die spannungsfreien Zustände durch Analysieren des Bremskraftverlaufs in den Bereichen der Wendepunkte des Bremskraftverlaufs ermittelt werden.

4. Vorrichtung zum Prüfen der Bremsen eines Kraftfahrzeugs mit mehreren gleichzeitig angetriebenen Achsen, die mechanisch miteinander unlösbar gekoppelt sind und bei denen zwischen die beiden Räder einer jeden Achse Ausgleichsgetriebe geschaltet sind, mit wenigstens zwei Rollenpaaren (17,18;19,20) für die beiden den Räder einer jeweiligen Achse einer Antriebseinrichtung (8,9) zum gegenläufigen Antrieb der beiden Rollenpaare, einer jedem Rollenpaar zugeordneten Bremskraftmeßeinrichtung (13,14) und einer Anzeigeeinrichtung (23) für die gemessenen Bremskräfte, dadurch gekennzeichnet, daß jeder Rollenpaarantrieb (8, 9, 16) eine Beschleunigungs- und Bremseinrichtung (16) enthält, die in bestimmten Zeitintervallen jeweils das Rollenpaar (17, 18 bzw. 19, 20), auf dem das zum Rad (4, 6 bzw. 3, 5) mit der zu prüfenden Bremse gegenläufige Rad (3, 5 bzw. 4, 6) aufsteht, beschleunigt und abbremst, so daß spannungsfreie Zustände zwischen den beiden gegenläufigen Rädern während eines Prüfvorgangs erzeugbar sind, und daß die Bremskraft jeweils während der spannungsfreien Zustände erfaßbar ist.

5. Vorrichtung nach Anspruch 4, dadurch gekennzeichnet, daß jedem Rollenpaar (17, 18 und 19, 20) eine Geschwindigkeitsmeßeinrichtung (10, TL und 11, TR) zugeordnet ist, daß beide Geschwindigkeitsmeßeinrichtungen (10, TL und 11, TR) an eine Auswerteeinrichtung (15) angeschlossen sind, daß die den beiden Rollenpaaren (17, 18 und 19, 20) jeweils zugeordneten Kraftmeßeinrichtungen (13, 14) für die Bremskraftmessung an die Auswerteeinrichtung (15) angeschlossen sind, und daß die Auswertung der Bremskraftmessung dann initiiert ist, wenn die Differenz der Drehgeschwindigkeiten der beiden auf die Rollenpaare (17, 18 und 19, 20) aufgesetzten Räder (3, 4 bzw. 5, 6), welche von den Geschwindigkeitsmeßeinrichtungen (10, TL und 11, TR) gemessen werden, sich ändert.

6. Vorrichtung nach Anspruch 4 oder 5, dadurch gekennzeichnet, daß der Antrieb des jeweiligen Rollenpaares, auf welchem das gegenläufige Rad aufsteht, über ein elliptisches Antriebsrad (31) erfolgt.

## Claims

1. A method of testing the brakes of a motor vehicle having a plurality of simultaneously driven axles which are mechanically non-releasably coupled together and in regard to which differential units are connected between the two wheels of each axle, wherein the motor vehicle wheels which are driven by pairs of rollers of a brake testing assembly in opposite directions at approximately the same speed on at least one axle are individually braked in the testing operation and the braking effect of the respective brake associated with a wheel is detected, characterised in that the wheel which is associated with the brake to be tested is alternately braked and accelerated by way of the contrarotating wheel and the interposed differential unit so that stress-free conditions occur between the two contrarotating wheels during a testing operation, and that the braking force is respectively detected during the stress-free conditions.

2. A method according to claim 1 characterised in that the stress-free conditions are detected by comparison of the speeds of the two contrarotating wheels.

3. A method according to claim 1 or claim 2 characterised in that the stress-free conditions are ascertained by analysis of the braking force characteristic curve in the regions of the inflection points of the braking force characteristic curve.

4. Apparatus for testing the brakes of a motor vehicle having a plurality of simultaneously driven axles which are mechanically non-releasably coupled together and in regard to which differential units are connected between the two wheels of each axle, comprising at least two pairs of rollers (17, 18; 19, 20) for the two wheels of a respective axle, a drive device (8, 9) for oppositely driving the two pair of rollers, a braking force measuring device (13, 14) associated with each pair of rollers and a display device (22) for the measured braking forces, characterised in that each drive (8, 9, 16) for a pair of rollers includes an accelerating and braking device (16) which at given intervals of time accelerates and brakes the respective pair of rollers (17, 18 or 19, 20 respectively) on which is supported the wheel (3, 5 or 4, 6 respectively) which is contrarotating relative to the wheel (4, 6 or 3, 5 respectively) with the brake to be tested so that stress-free conditions can be produced between the two contrarotating wheels during a testing operation, and that the braking force can be respectively detected during the stress-free conditions.

5. Apparatus according to claim 4 characterised in that a speed measuring device (10, TL and 11, TR) is associated with each pair of rollers (17, 18 and 19, 20), that both speed measuring device (10, TL and 11, TR) are connected to an evaluation device (15), that the force measuring devices (13, 14) for braking force measurement, which are respectively associated with the two pairs of rollers (17, 18 and 19, 20) are connected to the evaluation device (15), and that evaluation of the braking force measurement is initiated when the difference in respect of the speeds of rotation of the two wheels (3, 4 or 5, 6 respectively) which are put on to the pairs of rollers (17, 18 and 19, 20) and which are measured by the speed measuring devices (10, TL and 11, TR) changes.

6. Apparatus according to claim 4 or claim 5 characterised in that the drive for the respective pair of rollers on which the contrarotating wheel is supported is effected by way of an elliptical drive wheel (31).

## Revendications

1. Procédé pour contrôler les freins d'un véhicule automobile à plusieurs essieux entraînés simultanément, qui sont accouplés entre eux mécaniquement d'une manière non détachable et sur lesquels sont montés, entre les deux roues de chaque essieu, des différentiels, et selon lequel les roues d'au moins un essieu du véhicule automobile, qui sont entraînées par des couples de roues d'un banc d'essai de freins, en des sens opposés avec approximativement la même vitesse, sont freinés individuellement lors du processus de contrôle et l'action de freinage du frein respectif associé à une roue est détectée, caractérisé par le fait que la roue, qui est associé au frein à tester, est alternativement freinée et accélérée par l'intermédiaire de la roue opposée et d'un différentiel intercalé, de sorte que des états sans contrainte apparaissent entre les deux roues opposées, lors d'une opération de contrôle et que la force de freinage est détectée respectivement pendant les états sans contrainte.

2. Procédé suivant la revendication 1, caractérisé par le fait que les états sans contrainte sont détectés par comparaison des vitesses des deux roues opposées.

3. Procédé suivant la revendication 1 ou 2, caractérisé par le fait que les états sans contrainte sont déterminés par analyse du comportement de la force de freinage dans les zones des points d'inflexion de la variation de la force de freinage.

4. Dispositif pour tester les freins d'un véhicule automobile comportant plusieurs essieux entraînés simultanément, et qui sont accouplés entre eux mécaniquement d'une manière non détachable et parmi lesquels, entre les deux roues de chaque essieu sont montés des différentiels, comportant au moins deux couples de rouleaux (17,18; 19,20) pour les deux roues d'un essieu d'un dispositif d'entraînement (8,9) pour entraîner en des sens opposés les deux couples de rouleaux, d'un dispositif (13,14) de mesure de la force de freinage, qui est associé à chaque couple de rouleaux, et un dispositif d'affichage (22) servant à afficher les forces de freinage mesurées, caractérisé par le fait que chaque dispositif (8,9,16) d'entraînement des couples de rouleaux contient un dispositif d'accélération et de freinage (16), qui, à des intervalles de temps déterminés, accélère et freine respectivement le couple de rouleaux (17, 18 ou 19,20), sur lequel est en appui la roue (3,5 ou 4,6) qui tourne en sens opposé de la roue (4,6 ou 3,5) comportant le frein à contrôler, de sorte que des états sans contrainte entre les deux roues opposées sont produits pendant une opération de contrôle et que la force de freinage est détectée respectivement pendant l'état sans contrainte.

5. Dispositif suivant la revendication 4, caractérisé par le fait qu'à chaque couple de rouleaux (17,18 et 19,20) est associé un dispositif tachymétrique (10,TL et 11,TR), que les deux dispositifs tachymétriques (10,TL et 11,TR) sont raccordés à un dispositif d'évaluation (15), que les dispositifs de mesure de force (10,13), qui sont respectivement associés aux deux couples de rouleaux (17,18 et 19,20), sont raccordés au dispositif d'évaluation (15) et que l'évaluation de la mesure de la force de freinage est déclenchée lorsque la différence entre les vitesses de rotation des deux roues (3,4 et 5,6) en appui sur les couples de rouleaux (17,18 et 19,20), qui sont mesurées par les dispositifs tachymétriques (10,TL et 11,TR), varie.

6. Dispositif suivant la revendication 4 ou 5, caractérisé par le fait qu'un dispositif d'entraînement du couple respectif de rouleaux, sur lequel est en appui la roue tournant en sens opposé, s'effectue au moyen d'une roue d'entraînement elliptique (31).
